# EUROPÄISCHE PATENTSCHRIFT

(11) **EP 1 843 051 B1**
(45) Veröffentlichungstag und Bekanntmachung des Hinweises auf die Patenterteilung: **11.01.2012**
(21) Anmeldenummer: 07004299.9
(22) Anmeldetag: 02.03.2007
(51) Int. Cl.: F16C 7/02

(54) **Pleuel**
Connecting rod
Bielle

(30) Priorität: 05.04.2006 DE 102006015888
(43) Veröffentlichungstag der Anmeldung: 10.10.2007
(73) Patentinhaber: Bayerische Motoren Werke Aktiengesellschaft, 80809 München (DE)
(72) Erfinder: Luchner, Clemens, 83236 Übersee (DE); Pöllath, Helmut, 82223 Eichenau (DE)

(56) Entgegenhaltungen:
- DE-A1-102004 018 921
- DE-A1-102004 053 951

## Beschreibung

Die Erfindung betrifft ein Pleuel mit den Merkmalen aus dem Oberbegriff des Patentanspruchs 1.

Pleuel werden in Hubkolben-Brennkraftmaschinen zur Übertragung der Kolbenkraft und -bewegung auf die Kurbelwelle verwendet. Gegebenenfalls sind sie mit Bohrungen zur Schmierölversorgung des Kolbens versehen. Die Pleuelstange wird durch Gas- und Massenkräfte beansprucht, so dass sie eine ausreichende mechanische Festigkeit, eine hohe Tragfähigkeit an den Lagerstellen, eine möglichst kleine Masse sowie eine optimale Länge aufweisen soll. Pleuel weisen an ihren Enden Lageraugen auf, mittels welcher sie einerseits an den Kolben und andererseits an der Kurbelwelle angelenkt sind. Dabei sind üblicherweise in den Lagern Augengleitlager bzw. Wälzlager vorgesehen.

Pleuelstangen ohne gesonderte Gleitlager oder Wälzlager, sog. Integralpleuel, sind bekannt. Ein derartiges Pleuel, bei welchem zumindest eines der Pleuelaugen ein durch Vergüten und/oder einer Beschichtung der Innenfläche des Pleuelauges gebildetes Lager umfasst, beschreibt sehr allgemein die WO 96/04485 A1.

Die DE 10 2004 018 921 A1, von der diese Erfindung ausgeht, beschreibt ein Verfahren zur Herstellung einer Pleuelstange für einen eine Kurbelwelle und einen Kolben umfassenden Hubkolbenmotor mit einem dem Kolben zugeordneten ersten und einem der Kurbelwelle zugeordneten zweiten Pleuelauge, wobei im ersten Pleuelauge eine durch Vergütung und im zweiten Pleuelauge eine durch Beschichtung der Innenfläche des Pleuelauges Funktionsauflage gebildet ist, wobei die Vergütung und die Beschichtung in aufeinander folgenden Schritten erfolgt und die im ersten Schritt eingebrachte Wärme zur Vorwärmung des zweiten Schrittes genutzt wird.

Nachteilig bei dem gattungsbildenden Pleuel sind die, aufgrund der Wärmebehandlung des Pleuelauges auftretenden Verzüge.

Aufgabe der vorliegenden Erfindung ist es, ein Pleuel aufzuzeigen, welches weniger Verzug nach einer Wärmebehandlung aufweist.

Diese Aufgabe wird durch die Merkmale im kennzeichnenden Teil des Patentanspruchs 1 gelöst.
Aufgrund der erfindungsgemäßen Ausgestaltung verringern sich in vorteilhafter Weise auch die Herstellkosten durch:
➢ Den minimalen Härteverzug des Pleuelkopfes in sich und dessen Anbindung an die Pleuelstange aufgrund des geringen und gezielten Wärmeeintrags;
➢ Die kostengünstige Nachbearbeitungsmöglichkeit der Pleuelkopfseitenflächen mittels Schneidwerkzeugen aufgrund von ungehärtetem Werkstoff in diesem Bereich, d. h. kostenintensives Schleifen der Pleuelkopfseitenflächen entfällt;
➢ Die Möglichkeit der Abbildung der Form des Pleuelkopfes bereits im Rohteil;
➢ Die Bearbeitung der Ölversorgungsfasen - aufgrund des minimalen Härteverzugs - mit einem Schneidwerkzeug schon vor dem Härteprozess.
➢ Das minimale erforderliche Schleifaufmass in der Bohrung (Kolbenbolzenbohrung).

Ferner ergibt sich aufgrund des elastischen Nachfedervermögens der ungehärteten äußeren Lagerbohrungsbereiche/-zonen eine höhere Lebensdauer und Betriebssicherheit des Kolbenbolzenlagers. Darüber hinaus kann aufgrund der erfindungsgemäßen Ausgestaltung die Baugröße im Bereich des Pleuelauges reduziert werden, was zu einer Reduzierung der oszillierenden Kurbeltriebsmassen und somit zu einer größeren Laufruhe der Brennkraftmaschine führt.

Die Erstreckung der wärmebehandelten Zone gemäß der Patentansprüche 2 und 3 sind besonders bevorzugte Ausführungsbeispiele.

Ein Stahlwerkstoff gemäß Patentanspruch 4 ist in bekannter Weise wärmebehandel- bzw. härtbar.

Die Ausgestaltungsvarianten gemäß der Patentansprüche 5 und 6 sind ebenfalls besonders bevorzugte Ausführungsbeispiele.

Die Wärmebehandlungen gemäß Patentanspruch 7 eignen sich besonders gut zur erfindungsgemäßen Ausgestaltung des Pleuels.

Durch die Ausgestaltung gemäß Patentanspruch 8 werden in vorteilhafter Weise die Herstellkosten nochmals reduziert.

In vorteilhafter Weise können die Schmiermittelbohrungen gemäß Patentanspruch 9 in dem ungehärteten Bereich des Pleuelauges eingearbeitet werden, wodurch die Produktionskosten aufgrund längerer Standzeiten der Werkzeuge gesenkt werden.

Die Ausgestaltungen gemäß Patentanspruch 10 sind wiederum bevorzugte Ausführungsbeispiele.

Im Folgenden ist die Erfindung anhand von sieben Ausführungsbeispielen in zehn Figuren näher erläutert.
- Fig. 1: zeigt den Schnitt durch ein Trapezpleuel mit einer rotations-symmetrisch wärmebehandelten Zone;
- Fig. 2: zeigt einen Schnitt durch ein Trapezpleuel mit einer gleichmäßig von einem Bohrungsrand beabstandeten wärmebehandelten Zone;
- Fig. 3: zeigt einen Schnitt durch ein Bügelpleuel mit einer rotations-symmetrischen wärmebehandelten Zone;
- Fig. 4: zeigt einen Schnitt durch ein Trapezpleuel mit einer einseitig wärmebehandelten Zone;
- Fig. 5: zeigt einen Schnitt 5-5 aus Fig. 4 durch das Trapezpleuel mit einer einseitig wärmebehandelten Zone;
- Fig. 6: zeigt den Schnitt 5-5 aus Fig. 4 durch das Trapezpleuel mit einer einseitig wärmebehandelten Zone und mit Schmiermittelbohrungen;
- Fig. 7: zeigt einen Schnitt durch ein Parallelpleuel mit einer rotations-symmetrischen wärmebehandelten Zone die sich bis in den Bereich einer minimalen Dicke eines Pleuelkopfes erstreckt;
- Fig. 8: zeigt einen Schnitt durch ein Parallelpleuel mit einer rotations-symmetrischen wärmebehandelten Zone die sich bis in den Bereich einer Schmiermittelfase erstreckt;

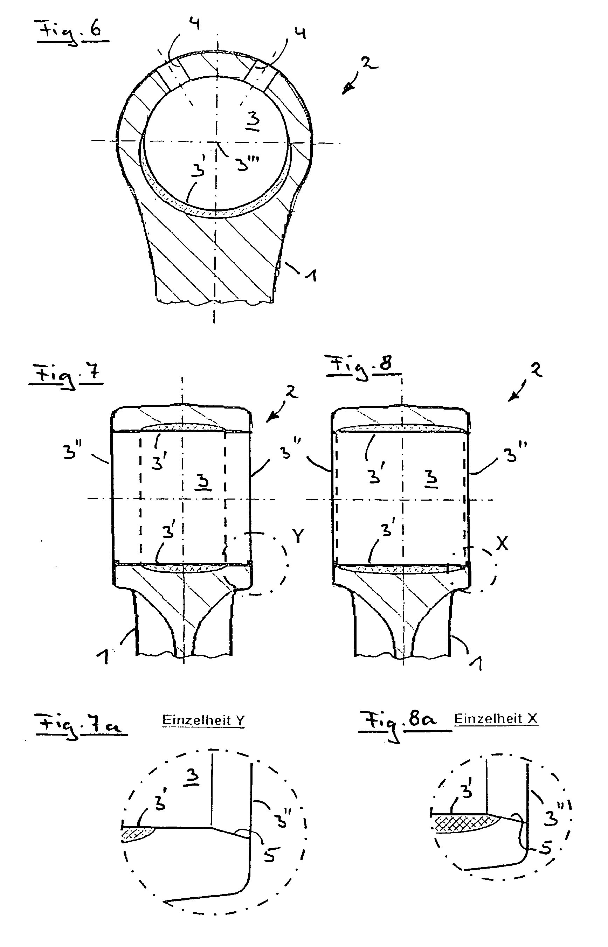

- Fig. 7a: zeigt einen Schnitt zeigt eine Detailansicht aus Fig. 7 der wärmebehandelten Zone die sich bis in den Bereich der minimalen Dicke des Pleuelkopfes erstreckt;
- Fig. 8a: zeigt einen Schnitt zeigt eine Detailansicht aus Fig. 7 der wärmebehandelten Zone die sich bis in den Bereich der Schmiermittelfase erstreckt.

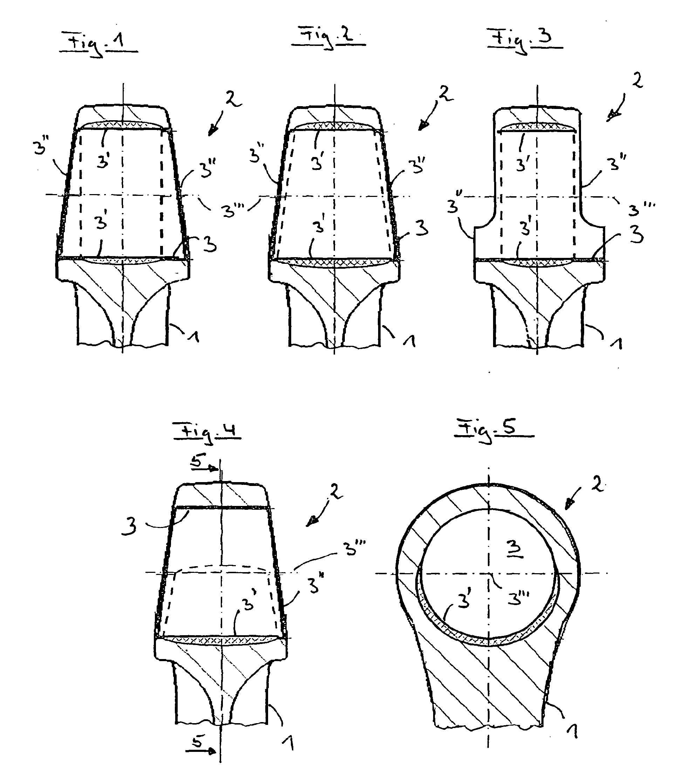

In den Fig. 1 bis 8a gelten für die gleichen Bauelemente die gleichen Bezugsziffern.

Die Fig. 1 bis 4 zeigen jeweils einen Schnitt entlang einer Bohrungsachse 3"' durch ein erfindungsgemäß ausgestaltetes Pleuelauge 2 eines Pleuels 1. Dargestellt ist jeweils nur das einem nicht dargestellten Kolben zugeordnete, sog. "kleine" Pleuelauge 2, das sog. "große" Pleuelauge des Pleuels 1, das einer ebenfalls nicht dargestellten Kurbelwelle zugeordnet ist, ist nicht dargestellt.

Das Pleuel 1 ist in allen Ausführungsvarianten aus einem Stahlwerkstoff hergestellt und weist jeweils im Pleuelauge 2 eine um die Bohrungsachse 3"' angeordnete Bohrung 3 mit einer in das Pleuelauge 2 ragenden wärmebehandelten Zone 3' auf. Die Bohrung 3 ist beidseitig des Pleuelauges 2 durch einen Bohrungsrand 3" begrenzt.

In Fig. 1 ist ein Schnitt durch ein Trapezpleuel mit einer sich um 360° radial, rotationssymmetrisch um einen Bohrungsumfang erstreckenden wärmebehandelten Zone 3' dargestellt. Die wärmebehandelte Zone 3' ragt erfindungsgemäß ca. 0,5 bis 2 mm in das Pleuelauge 2. Ein besonders bevorzugter Bereich der Eindringtiefe der wärmebehandelten Zone 3' liegt zwischen 0,1 und 3 mm. Darüber hinaus erstreckt sich die wärmebehandelte Zone 3' zwischen 1 mm und 3 mm bis an den Bohrungsrand 3". Ein besonders bevorzugter Abstandsbereich der wärmebehandelte Zone 3' vom Bohrungsrand 3" liegt zwischen 0,1 mm und 7 mm. Für eine besonders vorteilhafte Wärmebehandlung, bei der sich beim Härtevorgang wenigstens 50 HRC (Rockwellhärte), bevorzugt in einem Bereich von 52 bis 60 HRC, erzeugen lassen, weist der eisenmetallische Werkstoff einen Kohlenstoffgehalt zwischen 0,3 und 0,8 % auf.

In Fig. 2 ist nochmals ein Schnitt entlang der Bohrungsachse 3'" durch ein Trapezpleuel dargestellt, bei dem jedoch im Unterschied zu Fig. 1 die wärmebehandelte Zone 3' gleichmäßig ca. 1 mm vom Bohrungsrand 3" beabstandet ist. Alle weiteren Angaben aus Fig. 1 gelten neben für Fig. 2 auch für alle weiteren Ausführungsbeispiele.

In Fig. 3 ist ein Schnitt entlang der Bohrungsachse 3'" durch ein Bügelpleuel dargestellt. In diesem Ausführungsbeispiel ist die wärmebehandelte Zone 3' wiederum rotationssymmetrisch

In Fig. 4 ist nochmals ein Schnitt entlang der Bohrungsachse 3'" durch ein erfindungsgemäß ausgestaltetes Trapezpleuel dargestellt, wobei sich die wärmebehandelte Zone 3' in diesem Ausführungsbeispiel jedoch nur um ca. 180° um den Bohrungsumfang erstreckt. Die wärmebehandelte Zone 3' befindet sich hierbei auf der dem großen Pleuelauge zugewandten Seite. Diese Ausgestaltung eignet sich insbesondere für Brennkraftmaschinen mit hohen Gasdrücken, wie sie beispielsweise bei Diesel-Brennkraftmaschinen erreicht werden. Bei dieser Ausführungsvariante können zusätzlich im ungehärteten Pleuelkopfbereich eine oder mehrere, wie in Fig. 6 dargestellt, Schmiermittelbohrungen vorgesehen werden. Bei den Ausführungsvarianten mit rundum wärmebehandelter Zone 3' ist dies nicht möglich, da das Bohren der Schmiermittelbohrung vor der Wärmebehandlung erfolgen muss, um ein "Verbrennen der Schmiermittelbohrungsaustrittskante zu verhindern.

In Fig. 5 ist ein Schnitt 5-5 aus Fig. 4 senkrecht zur Bohrungsachse 3'" durch das Trapezpleuel dargestellt. Deutlich erkennbar erstreckt sich die wärmebehandelte Zone 3' nur um ca. 180° um den Bohrungsumfang.

Fig. 6 zeigt den Schnitt 5-5 aus Fig. 4 durch das Trapezpleuel mit einer einseitig wärmebehandelten Zone 3' und mit zwei Schmiermittelbohrungen 4, die in einem nicht wärmebehandelten (gehärteten) Bereich des Pleuelkopfes eingebracht sind.

Fig. 7 zeigt einen Schnitt durch ein Parallelpleuel mit einer rotationssymmetrischen wärmebehandelten Zone die sich bis in den Bereich einer minimalen Dicke eines Pleuelkopfes erstreckt.

Fig. 8 zeigt einen Schnitt durch ein Parallelpleuel mit einer rotationssymmetrischen wärmebehandelten Zone die sich bis in den Bereich einer Schmiermittelfase erstreckt.

Fig. 7a zeigt einen Schnitt zeigt eine Detailansicht aus Fig. 7 der wärmebehandelten Zone die sich bis in den Bereich der minimalen Dicke des Pleuelkopfes erstreckt.

Fig. 8a zeigt einen Schnitt zeigt eine Detailansicht aus Fig. 7 der wärmebehandelten Zone die sich bis in den Bereich der Schmiermittelfase erstreckt.

In weiteren besonders bevorzugten Ausführungsbeispielen kann die Bohrung 3. auch queroval sein und/oder entlang der Bohrungsachse 3'" in Richtung des Bohrungsrandes 3" aufgeweitet werden. Die Ovalität kann beispielsweise zwischen 0,002 und 0,1 mm betragen. Der gleiche Größenbereich gilt auch für eine Aufweitung des Bohrungsdurchmessers in Richtung der Bohrungsränder 3", wobei zumindest 20 % einer Bohrungslänge im Mittenbereich konstant ein vorgegebenes Nennmaß aufweisen.

Die Wärmebehandlung zur Erzeugung der wärmebehandelten Zone 3' wird vorzugsweise durch eine Induktivhärtung oder durch eine Laserstrahlhärtung erzeugt.

Erfindungsgemäß wird nur eine teilweise und/oder abschnittsweise Induktiv-oder Laserstrahlhärtung der Bohrung 3, der Kolbenbolzenbohrung, eines Integralpleuel aus einem Eisen- bzw. Stahlwerkstoff mit einem bevorzüglichen Kohlenstoffgehalt zwischen 0,3 und 0,8 % durchgeführt, so dass zumindest die gegenüber einer Pleueldicke zurückgesetzten Planflächenbereiche von Trapezpleuel oder Formflächenbereiche von Bügelpleuel keine Gefügeänderungen aufweisen, d. h. nicht gehärtet sind. Zulässig ist höchstens eine im Bereich der minimalen Dicke des Trapezes, bzw. Bügels, bzw. im Bereich der Schmiermittelfasen auslaufenden Härtezone. Zur erfindungsgemäß ausgestalteten Lageranordnung gehört ein oberflächenbehandelter, vorzugsweise ein nitrierter und oxidierter, bzw. DLC-beschichteter Kolbenbolzen.

Aufgrund der erfindungsgemäßen Ausgestaltung des Pleuelauges 2 verringern sich die Herstellkosten durch:
➢ Den minimalen Härteverzug aufgrund des geringen und gezielten Wärmeeintrags (geringes erforderliches Schleifaufmass);
➢ Die kostengünstige Nachbearbeitungsmöglichkeit der Pleuelkopfseitenflächen mittels Schneidwerkzeugen aufgrund von ungehärtetem Werkstoff in diesem Bereich, d. h. kostenintensives Schleifen der Pleuelkopfseitenflächen entfällt;
➢ Die Möglichkeit der Abbildung der Form des Pleuelkopfes bereits im Rohteil;
➢ Die Bearbeitung der Ölversorgungsfase - aufgrund des minimalen Härteverzugs - mit einem Schneidwerkzeug schon vor dem Härteprozess.

Ferner ergibt sich durch die erfindungsgemäße Ausgestaltung eine höhere Lebensdauer und Betriebssicherheit des Kolbenbolzenlagers aufgrund des elastischen Nachfeder- bzw. Einlaufvermögens der ungehärteten Lagerbohrungsrandbereiche/-zonen.

Des weiteren ist durch die erfindungsgemäße Ausgestaltung eine Rissbildung bzw. eine Rissentstehung im Bereich des Bohrungsrandes 3''' vermieden, da sich dort zähelastisches, nicht gehärtetes Material befindet.

### Bezugszeichenliste:

- 1.: Pleuel
- 2.: Pleuelauge
- 3.: Bohrung
- 3': wärmebehandelte Zone
- 3": Bohrungsrand
- 3"': Bohrungsachse
- 4.: Schmiermittelbohrung
- 5.: Schmiermittelfase

## Patentansprüche

1. Pleuel (1) aus einem Stahlwerkstoff, insbesondere für eine Hubkolbenbrennkraftmaschine, mit einem Pleuelauge (2) mit einer Bohrung (3) für einen Kolbenbolzen, wobei nur die Bohrung (3) des Pleuelauges (2) wärmebehandelt ist zur Erzeugung einer wärmebehandelten Zone (3'), **dadurch gekennzeichnet, dass** die wärmebehandelte Zone (3') nicht bis an einen Bohrungsrand (3") reicht.

2. Pleuel nach Patentanspruch 1,
**dadurch gekennzeichnet, dass** die wärmebehandelte Zone (3') zwischen 0,1 mm und 7 mm von dem Bohrungsrand (3") beabstandet ist.

3. Pleuel nach Patentanspruch 1 oder 2,
**dadurch gekennzeichnet, dass** die wärmebehandelte Zone (3') zwischen 0,1 mm und 3,0 mm in das Material ragt.

4. Pleuel nach einem der Patentansprüche 1 bis 3,
**dadurch gekennzeichnet, dass** der Stahlwerkstoff einen Kohlenstoffgehalt zwischen 0,3% und 0,8% aufweist.

5. Pleuel nach einem der Patentansprüche 1 bis 4,
**dadurch gekennzeichnet, dass** die wärmebehandelte Zone (3') gleichmäßig von dem Bohrungsrand (3") beabstandet ist.

6. Pleuel nach einem der Patentansprüche 1 bis 4,
**dadurch gekennzeichnet, dass** die wärmebehandelte Zone (3') rotationssymmetrisch ist.

7. Pleuel nach einem der Patentansprüche 1 bis 6,
**dadurch gekennzeichnet, dass** die Wärmebehandlung induktiv oder durch Laserstrahlung erfolgt ist.

8. Pleuel nach einem der zuvor genannten Patentansprüche, wobei das Pleuel ein zweites, einer Kurbelwelle zugeordnetes Pleuelauge aufweist,
**dadurch gekennzeichnet, dass** die Bohrung (3) überwiegend nur auf der dem zweiten Pleuelauge zugewandten Seite eine wärmebehandelte Zone aufweist.

9. Pleuel nach Patentanspruch 8,
**dadurch gekennzeichnet, dass** in einem ungehärteten Bereich des Pleuelauges (2) eine Schmiermittelbohrung (4) bis zur Bohrung (3) angeordnet ist.

10. Pleuel nach einem der zuvor genannten Patentansprüche,
**dadurch gekennzeichnet, dass** die Bohrung (3) zylindrisch oder queroval und/oder entlang der Bohrungsachse (3"') in Richtung des Bohrungsrandes (3") aufgeweitet ist.

## Claims

1. A connecting rod (1) made of a steel material, especially for an internal combustion piston engine, with a connecting rod eye (2) with a bore (3) for a piston pin, only the bore (3) of the connecting rod eye (2) being heat-treated to produce a heat-treated zone (3'), **characterised in that** the heat-treated zone (3') does not reach to the bore edge (3").

2. A connecting rod according to claim 1,
**characterised in that** the heat-treated zone (3') is spaced apart from the bore edge (3") between 0.1 mm and 7 mm.

3. A connecting rod according to claim 1 or claim 2, **characterised in that** the heat-treated zone (3') projects into the material between 0.1 mm and 3.0 mm.

4. A connecting rod according to any one of claims 1 to 3, **characterised in that** the steel material has a carbon content of between 0.3% and 0.8%.

5. A connecting rod according to any one of claims 1 to 4, **characterised in that** the heat-treated zone (3') is uniformly spaced apart from the bore edge (3").

6. A connecting rod according to any one of claims 1 to 4, **characterised in that** the heat-treated zone (3') is rotationally symmetrical.

7. A connecting rod according to any one of claims 1 to 6, **characterised in that** the heat treatment takes place inductively or by laser radiation.

8. A connecting rod according to any one of the preceding claims, wherein the connecting rod has a second connecting rod eye associated with a crankshaft, **characterised in that** the bore (3) has a heat-treated zone predominantly only on the side facing the second connecting rod eye.

9. A connecting rod according to claim 8,
**characterised in that** a lubricant bore (4) is arranged up to the bore (3) in an unhardened region of the connecting rod eye (2).

10. A connecting rod according to any one of the preceding claims,
**characterised in that** the bore (3) is cylindrical or transverse-oval and/or widened along the bore axis (3"') in the direction of the bore edge (3").

## Revendications

1. Bielle (1) en acier, notamment pour un moteur à combustion interne à pistons linéaires comportant une bague (2) avec un alésage (3) pour l'axe du piston,
* seul l'alésage (3) de la bague (2) étant soumis à un traitement thermique pour générer une zone de traitement thermique (3'),
**caractérisée en ce que**
la zone de traitement thermique (3') n'arrive pas jusqu'au bord (3") de l'alésage.

2. Bielle selon la revendication 1,
**caractérisée en ce que**
la zone de traitement thermique (3') est écartée du bord (3") de l'alésage d'une distance comprise entre 0,1 mm et 7 mm.

3. Bielle selon la revendication 1 ou 2,
**caractérisée en ce que**
la zone de traitement thermique (3') pénètre dans la matière sur une profondeur comprise entre 0,1 mm et 3,0 mm.

4. Bielle selon l'une des revendications 1 à 3,
**caractérisée en ce que**
l'acier a une teneur en carbone comprise entre 0,3 % et 0,8 %.

5. Bielle selon l'une des revendications 1 à 4,
**caractérisée en ce que**
la zone de traitement thermique (3') est écartée régulièrement du bord (3") de l'alésage.

6. Bielle selon l'une des revendications 1 à 4,
**caractérisée en ce que**
la zone de traitement thermique (3') est symétrique en rotation.

7. Bielle selon l'une des revendications 1 à 6,
**caractérisée en ce que**
la zone de traitement thermique est traitée par induction ou par faisceau laser.

8. Bielle selon l'une des revendications précédentes, dans laquelle la bielle comporte un second alésage (tête de bielle) associé au vilebrequin,
**caractérisée en ce que**
l'alésage (3) comporte une zone de traitement thermique principalement seulement sur le côté tourné vers le second alésage.

9. Bielle selon la revendication 8,
**caractérisée en ce que**
la zone non traitée de la tête de bielle (2) comporte un perçage de lubrification (4) arrivant jusque dans l'alésage (3).

10. Bielle selon l'une des revendications précédentes,
**caractérisée en ce que**
la section de l'alésage (3) est cylindrique ou ovale et/ou s'élargit le long de l'axe (3"') de l'alésage en direction du bord (3") de l'alésage.
